# EUROPÄISCHE PATENTSCHRIFT

(11) **EP 2 122 926 B1**
(45) Veröffentlichungstag und Bekanntmachung des Hinweises auf die Patenterteilung: **04.04.2012**
(21) Anmeldenummer: 06819031.3
(22) Anmeldetag: 14.12.2006
(51) Int. Cl.: H04L 12/46, H04L 12/24, H04L 12/40, H04L 12/66, H04L 29/08, H04L 29/12, B60R 16/023, G06F 13/40

(54) **Verfahren zur Vernetzung von Steuergeräten eines Kraftfahrzeugs, darauf beruhendes Datenbussystem und Computerprogramm-Produkt**
Method of setting up a controller network in a vehicle, corresponding data bus system and computer programm product
Procédé de mise en réseau d'appareils de commande d'un véhicule automobile, système de bus de donnés correspondant et produit de programme d'ordinateur

(43) Veröffentlichungstag der Anmeldung: 25.11.2009
(73) Patentinhaber: Bayerische Motoren Werke Aktiengesellschaft, 80809 München (DE)
(72) Erfinder: SIEFERMANN, Otmar, 82194 Groebenzell (DE); WENDE, Frank, 82008 Unterhaching (DE)
(74) Vertreter: Grüter, Klaus Peter
(86) Internationale Anmeldenummer: PCT/EP2006/012035
(87) Internationale Veröffentlichungsnummer: WO 2008/071212

(56) Entgegenhaltungen:
- DE-A1- 3 838 945
- DE-A1- 4 110 372
- DE-A1- 10 131 923
- US-A- 4 627 052
- US-A1- 2005 113 988
- US-B1- 6 202 114

## Beschreibung

Die Erfindung betrifft ein Verfahren zur Vernetzung von Steuergeräten in einem Kraftfahrzeug mit mindestens zwei Datenbussen gemäß dem Oberbegriff des Anspruchs 1, sowie ein Datenbussystem und ein Computerprogramm-Produkt.

In bekannten Fahrzeugen sind Datenbus-Systeme vorhanden, die teils unterschiedlich sind, die über Gateways bzw. Datenschnittstellen zwischen den Datenbussen bzw. Datenbus-Systemen informationstechnisch verbunden sind. Die Vorschriften, in denen festgelegt ist, welche Nachrichten in welche Datenbusse weitergeleitet werden, sind in den Gateways in so genannten Routing-Tabellen hinterlegt. Diese Routing-Tabellen werden im Rahmen der Fahrzeugentwicklung festgelegt und sind unveränderlich in den Gateways festgelegt.

Ein Verfahren zur Vernetzung von Steuergeräten in einem Kraftfahrzeug mit mindestens zwei Datenbussen nach dem Oberbegriff des Anspruchs 1 und ein entsprechend vernetztes Datenbussystem sind beispielsweise aus der US 2005 / 0 113 988 A1 bekannt.

Zwar spricht schon die oben genannte Schrift eine selbsttätige Erstellung von Routing-Vorgaben durch Überwachung des Datenverkehrs an, ohne jedoch näher darauf einzugehen, wie dies geschehen soll. Bei der auf allgemeine Netzwerke bezogenen US 4 627 052 A werden hierzu im Gateway pro Netzwerkteil die Quelladressen aus Datenpaketen der jeweiligen Stationen des Netzwerkteils im Betrieb oder alternativ in einer Initialisierungsphase vom Gateway gelesen und jeweils in einer Tabelle gespeichert, und im Betrieb nur diejenigen aus dem einen Netzwerkteil gesendeten Datenpakete in den anderen Netzwerkteil übertragen, deren Zieladresse (-> Bringpflicht) nicht mit einer der abgespeicherten (Quell-) Adressen der Tabelle des einen Netzwerkteils übereinstimmt. Da die Übertragung vorrangig geschieht und damit die Tabellen der Netzwerkteile anfangs leer sind, entsteht zu Beginn unnützer Datenverkehr, bis alle Stationen mindestens einmal Datenpakete gesendet haben und damit deren Quelladressen in den jeweiligen Tabellen abgespeichert sind. Dies kann beschleunigt werden, indem auch Datenpakete von Empfangsbestätigungen ausgewertet werden oder indem in der alternativen Initialisierungsphase sogenannte "Dummy"-Datenpakete von allen Stationen des Netzwerks ausgesendet und ausgewertet werden.

Aufgabe der Erfindung ist die Bereitstellung eines flexibleren Verfahrens zur Vernetzung von Steuergeräten, eines darauf beruhenden Datenbussystems und Computerprogramm-Produkts.

Diese Aufgabe wird durch die im Anspruch 1 9 und 10 genannten Maßnahmen gelöst. Vorteilhafte Ausgestaltungen sind Gegenstand der abhängigen Ansprüche.

Die Erfindung geht aus von einem Verfahren zur Vernetzung von Steuergeräten in einem Kraftfahrzeug mit mindestens zwei Datenbussen, von denen erste ablaufgesteuerte Steuergeräte an einem ersten Datenbus und zweite ablaufgesteuerte Steuergeräte an einem zweiten Datenbus angeschlossen sind. Erste Steuergeräte tauschen mit zweiten Steuergeräten über mindestens eine Gateway-Einrichtung Nachrichten auf der Basis einer Routing-Vorgabe aus.

Ein Kerngedanke der Erfindung besteht nun darin, dass ein erstes Steuergerät der ersten oder zweiten Steuergeräte über die Gateway-Einrichtung hinweg in die mindestens zwei Datenbusse hinein eine erste Nachricht sendet. Bei der ersten Nachricht handelt es sich bevorzugt um eine solche Nachricht, die das erste Steuergerät üblicherweise bei dem Betrieb des Kraftfahrzeugs aussendet.

Mindestens ein zweites Steuergerät der ersten oder zweiten Steuergeräte empfängt die erste Nachricht und prüft, ob für das betreffende Steuergerät der Empfang und/oder die Verarbeitung der ersten Nachricht erforderlich ist, um die ihm mittels seiner Ablaufsteuerung zugedachten Aufgaben beim Betrieb des Kraftfahrzeugs erfüllen zu können. Das zweite Steuergerät sendet eine Antwort-Nachricht aus, die zumindest erkennen lässt, ob das zweite Steuergerät einen entsprechenden Bedarf hat die erste Nachricht zu empfangen und/oder zu verarbeiten. Im Bedarfsfall wird eine Routing-Vorgabe erstellt und/oder eine bestehende Routing-Vorgabe dahingehend verändert, das diese veranlasst, dass die erste Nachricht von dem ersten Steuergerät über die Gateway-Einrichtung zum zweiten Steuergerät gelangt.

Mit der erfindungsgemäßen Lösung ist es möglich, fahrzeugindividuelle Routing-Vorgaben, insbesondere Routing-Tabellen, zu generieren. Dies geschieht bevorzugt im Fahrzeug, z.B. am Ende der Fahrzeugproduktion bzw. nachdem alle Steuergeräte im Fahrzeug verbaut worden sind, nach einem Steuergeräte-Austausch oder dem Einbau eines weiteren oder neuen Steuergeräts und/oder nach der Änderung der Ablaufsteuerung mindestens eines Steuergeräts.

Bei einer bevorzugten Ausführungsform der Erfindung ist vorgesehen, dass die Bedarfsabfrage von jedem Steuergerät der ersten und zweiten Steuergeräte vorgenommen wird. Bevorzugt wird die Bedarfsabfrage zudem für weitgehend jede Nachricht des betreffenden Steuergeräts durchgeführt, die dieses generieren kann. Hierdurch ist es möglich, eine vollständige Vernetzung sämtlicher Steuergeräte für beliebige Busstrukturen herbeizuführen.

Bei einer Ausgestaltung der Erfindung ist vorgesehen, dass das zweite Steuergerät die Antwort-Nachricht mindestens an das erste Steuergerät sendet und das erste Steuergerät und/oder das zweite Steuergerät und/oder die Gateway-Einrichtung die Routing-Vorgabe erstellt, eine bestehende Routing-Vorgabe entsprechend verändert, ergänzt oder deren Erstellung und/oder deren entsprechende Veränderung veranlasst. Alternativ oder ergänzend kann im Fahrzeug eine Routing-Vorgabe-Vorrichtung vorgesehen sein, die die Routing-Vorgabe erstellt, eine bestehende Routing-Vorgabe entsprechend verändert, ergänzt oder deren Erstellung und/oder deren entsprechende Veränderung veranlasst. Im Falle eine Ergänzung der Routing-Vorgabe kann eine fest vorgegebene Routing-Vorgabe mit der im Rahmen der Bedarfsabfrage erlernten Routing-Vorgabe kombiniert werden. Hierdurch lässt sich die Bedarfsabfrage auf solche Nachrichten beschränken für die noch keine fest vorgegebene Routing-Vorgabe festgelegt worden ist, wodurch sich der Initialisierungs- bzw. Lern-Vorgang beschleunigen lässt. Bei solchen Nachrichten für die noch keine feste Routing-Vorgabe festgelegt ist, kann es sich beispielsweise um Nachrichten handeln, die sich daran orientieren in welchem Land das Fahrzeug benutzt wird.

Bei einer Ausführungsform der Erfindung ist vorgesehen, dass das erste Steuergerät die erste Nachricht nur dann während des Betriebs des Fahrzeugs erneut aussendet, wenn mindestens ein anderes Steuergerät dem ersten Steuergerät einen entsprechenden Bedarf mitgeteilt hat. Hierdurch ist es möglich, den fahrzeugindividuellen Datenaustausch innerhalb der Datenbusse des Fahrzeugs während dessen Betriebs zu optimieren, indem nicht benötigte Daten nicht unnötig die Datenbusse des Fahrzeugs belasten.

Bei einer bevorzugten Ausführungsform der Erfindung ist vorgesehen, dass die Bedarfsabfrage nach der Fertigstellung der Vernetzung der Steuergeräte im Rahmen der Fahrzeugherstellung vorgenommen wird.

Bei einer weiteren bevorzugten Ausführungsform der Erfindung ist vorgesehen, dass die Bedarfsabfrage erneut nach dem Austausch eines Steuergeräts und/oder nach der Erweiterung der Vernetzung durch ein weiteres Steuergerät und/oder nach der Änderung der Ablaufsteuerung mindestens eines Steuergeräts vorgenommen und die Routing-Vorgabe entsprechend angepasst wird.

Bei einer Ausführungsform der Erfindung ist vorgesehen, dass die Routing-Vorgabe mindestens in der Gateway-Einrichtung gespeichert wird, wobei die Routing-Vorgabe bevorzugt eine Routing-Tabelle ist.

Bei einer Ausgestaltung der Erfindung ist vorgesehen, dass die Routing-Vorgabe in einem nichtflüchtigen, erneut beschreibbaren Speicher gespeichert wird, wie insbesondere ein NV-RAM (Non-Volatile Random Access Memory). Hierdurch ist es möglich, die Routing-Vorgabe an die Erfordernisse des konkreten Fahrzeugs zum aktuellen Zeitpunkt anpassen zu können.

Die Erfindung ermöglicht ferner die Realisierung eines vorteilhaften Datenbus-Systems eines Kraftfahrzeugs bei dem das Datenbus-System oder dessen Steuergeräte mindestens eine Ablaufsteuerung aufweist bzw. aufweisen, die die Durchführung eines erfindungsgemäßen Verfahrens veranlasst. Ferner umfasst die Erfindung die Bereitstellung eines Computerprogramm-Produkts für ein vernetztes Steuergerät oder für ein Datenbus-System eines Kraftfahrzeugs, bei dem mindestens eine Ablaufsteuerung die Durchführung eines erfindungsgemäßen Verfahrens veranlasst.

## Patentansprüche

1. Verfahren zur Vernetzung von Steuergeräten in einem Kraftfahrzeug mit mindestens zwei Datenbussen, von denen erste ablaufgesteuerte Steuergeräte an einem ersten Datenbus und zweite ablaufgesteuerte Steuergeräte an einem zweiten Datenbus angeschlossen sind und erste Steuergeräte mit zweiten Steuergeräten über mindestens eine Gateway-Einrichtung Nachrichten auf der Basis einer Routing-Vorgabe austauschen, **dadurch gekennzeichnet,**
- **dass** ein erstes Steuergerät der ersten oder zweiten Steuergeräte über die Gateway-Einrichtung hinweg in die mindestens zwei Datenbusse hinein eine erste Nachricht sendet, wobei es sich bei der ersten Nachricht um eine solche Nachricht handelt, die das erste Steuergerät üblicherweise bei dem Betrieb des Kraftfahrzeugs aussendet,
- **dass** mindestens ein zweites Steuergerät der ersten oder zweiten Steuergeräte die erste Nachricht empfängt und prüft, ob für das betreffende Steuergerät der Empfang und/oder die Verarbeitung der ersten Nachricht erforderlich ist, um die ihm mittels seiner Ablaufsteuerung zugedachten Aufgaben beim Betrieb des Kraftfahrzeugs erfüllen zu können,
- **dass** das zweite Steuergerät eine Antwort-Nachricht aussendet, die zumindest erkennen lässt, ob das zweite Steuergerät einen entsprechenden Bedarf hat die erste Nachricht zu empfangen und/oder zu verarbeiten, und
- **dass** im Bedarfsfall eine Routing-Vorgabe erstellt und/oder eine bestehende Routing-Vorgabe dahingehend verändert wird, dass diese veranlasst, dass die erste Nachricht von dem ersten Steuergerät über die Gateway-Einrichtung zum zweiten Steuergerät gelangt.

2. Verfahren nach Anspruch 1, **dadurch gekennzeichnet, dass** die Bedarfsabfrage von jedem Steuergerät der ersten und zweiten Steuergeräte vorgenommen wird und/oder dass die Bedarfsabfrage für weitgehend jede Nachricht des betreffenden Steuergeräts vorgenommen wird, die dieses generieren kann.

3. Verfahren nach Anspruch 1 oder 2, **dadurch gekennzeichnet, dass** das zweite Steuergerät die Antwort-Nachricht mindestens an das erste Steuergerät sendet und das erste Steuergerät und/oder das zweite Steuergerät und/oder die Gateway-Einrichtung die Routing-Vorgabe erstellt, eine bestehende Routing-Vorgabe entsprechend verändert, ergänzt oder deren Erstellung und/oder deren entsprechende Veränderung veranlasst.

4. Verfahren nach einem der vorstehenden Ansprüche, **dadurch gekennzeichnet, dass** das erste Steuergerät die erste Nachricht nur dann während des Betriebs des Fahrzeugs erneut aussendet, wenn mindestens ein anderes Steuergerät dem ersten Steuergerät einen entsprechenden Bedarf mitgeteilt hat.

5. Verfahren nach einem der vorstehenden Ansprüche, **dadurch gekennzeichnet, dass** die Bedarfsabfrage nach der Fertigstellung der Vernetzung der Steuergeräte im Rahmen der Fahrzeugherstellung vorgenommen wird.

6. Verfahren nach einem der vorstehenden Ansprüche, **dadurch gekennzeichnet, dass** die Bedarfsabfrage erneut nach dem Austausch eines Steuergeräts und/oder nach der Erweiterung der Vernetzung durch ein weiteres Steuergerät und/oder nach der Änderung der Ablaufsteuerung mindestens eines Steuergeräts vorgenommen und die Routing-Vorgabe entsprechend angepasst wird.

7. Verfahren nach einem der vorstehenden Ansprüche, **dadurch gekennzeichnet, dass** die Routing-Vorgabe mindestens in der Gateway-Einrichtung gespeichert wird, wobei die Routing-Vorgabe bevorzugt eine Routing-Tabelle ist.

8. Verfahren nach Anspruch 7, **dadurch gekennzeichnet, dass** die Routing-Vorgabe in einem nichtflüchtigen, erneut beschreibbaren Speicher gespeichert wird, wie insbesondere ein nichtflüchtigen Speicherbaustein mit wahlfreiem Zugriff (Non Volatile Random Access Memory, NV-RAM).

9. Datenbus-System eines Kraftfahrzeugs mit vernetzten Steuergeräten, **dadurch gekennzeichnet, dass** das Datenbus-System oder dessen Steuergeräte und/oder eine fahrzeugexterne Initialisierungs-Vorrichtung mindestens eine Ablaufsteuerung aufweist bzw. aufweisen, die die Durchführung eines Verfahrens nach einem der vorstehenden Ansprüche veranlasst.

10. Computerprogramm-Produkt für ein vernetztes Steuergerät oder für ein Datenbus-System eines Kraftfahrzeugs, **gekennzeichnet durch** mindestens eine Ablaufsteuerung, die die Durchführung eines Verfahrens nach einem der vorstehenden Ansprüche veranlasst.

## Claims

1. A method for networking control devices in a motor vehicle with at least two data buses, of which first sequence-controlled control devices are connected to a first data bus and second sequence-controlled control devices are connected to a second data bus and first control devices exchange messages with second control devices via at least one gateway mechanism based on a routing default, **characterised in that**
- a first control device of the first or second control devices sends a first message via the gateway device into the at least two data buses, the first message being a message of the type which the first control device generally sends during operation of the motor vehicle,
- **in that** at least a second control device of the first or second control devices receives the first message and checks whether, for the relevant control device, the receiving and/or the processing of the first message is necessary in order to be able to carry out the tasks intended for it by means of its sequence control during the operation of the motor vehicle,
- **in that** the second control device sends a response message, which at least allows it to be seen whether the second control device has a corresponding need to receive the first message and/or to process it, and
- **in that** if necessary, a routing default is set up and/or an existing routing default is changed to the effect that the latter causes the first message to arrive at the second control device from the first control device via the gateway mechanism.

2. A method according to claim 1, **characterised in that** the enquiry regarding need is carried out by each control device of the first and second control devices and/or **in that** the enquiry regarding need is carried out for substantially every message of the relevant control device which said control device can generate.

3. A method according to claim 1 or 2, **characterised in that** the second control device sends the response message at least to the first control device and the first control device and/or the second control device and/or the gateway mechanism sets up the routing default, accordingly varies an existing routing default, supplements it or causes it to be set up and/or causes its corresponding variation.

4. A method according to any one of the preceding claims, **characterised in that** the first control device only sends the first message again during operation of the vehicle when at least one other control device has informed the first control device of a corresponding need.

5. A method according to any one of the preceding claims, **characterised in that** the enquiry regarding need is carried out after completing the networking of the control devices during the production of the vehicle.

6. A method according to any one of the preceding claims, **characterised in that** the enquiry regarding need is carried out again after the exchange of a control device and/or after the extension of the network by a further control device and/or after the changing of the sequence control of at least one control device and the routing default is adapted accordingly.

7. A method according to any one of the preceding claims, **characterised in that** the routing default is stored at least in the gateway mechanism, the routing default preferably being a routing table.

8. A method according to claim 7, **characterised in that** the routing default is stored in a non-volatile, rewritable memory, such as, more especially, a non-volatile memory module with dial-free access (Non Volatile Random Access Memory, NV-RAM).

9. A data bus system of a motor vehicle with networked control devices, **characterised in that** the data bus system or its control devices and/or an initialisation means external to the vehicle has or have at least one sequence control, which causes a method according to any one of the preceding claims to be carried out.

10. A computer program product for a networked control device or for a data bus system of a motor vehicle, **characterised by** at least one sequence control, which causes a method according to any one of the preceding claims to be carried out.

## Revendications

1. Procédé de mise en réseau d'appareils de commande dans un véhicule automobile, comportant au moins deux bus de données parmi lesquelles des premiers appareils de commande, commandés en déroulement, sont reliés à un premier bus de données et des seconds appareils de commande de déroulement sont reliés à un second bus de données et les premiers appareils de commande échangent avec les seconds appareils de commande des informations à travers au moins un portail sur le fondement d'une prédéfinition de routage,
procédé **caractérisé en ce qu'**
un premier appareil de commande parmi les premiers et les seconds appareils de commande envoie par le portail une première information par au moins deux bus de données,
* la première information étant une information que le premier appareil de commande émet usuellement lors du fonctionnement du véhicule automobile,
* au moins un second appareil de commande parmi les premiers et seconds appareils de commande reçoit la première information et vérifie si pour l'appareil de commande concerné, la réception et/ou le traitement de la première information sont nécessaires pour pouvoir remplir pendant le fonctionnement du véhicule automobile, les tâches associées par sa commande de déroulement,
* le second appareil de commande émet une information de réponse qui indique au moins si le second appareil de commande a un besoin correspondant pour recevoir la première information et/ou la traiter, et
* si nécessaire, on établit une consigne de routage et/ou on modifie en continu la consigne de routage existant de façon que la première information arrive du premier appareil de commande au second appareil de commande en passant par le portail.

2. Procédé selon la revendication 1,
**caractérisé en ce qu'**
on demande les besoins de chaque appareil de commande parmi les premiers seconds appareils de commande et/ou la demande de besoins sera faite de manière très large pour chaque information concernant l'appareil de commande qui peut la générer.

3. Procédé selon la revendication 1 ou 2,
**caractérisé en ce que**
le second appareil de commande envoie l'information de réponse au moins au premier appareil de commande et le premier appareil de commande et/ou le second appareil de commande et/ou le portail établissent la consigne de routage, modifient, complètent ou établissent la consigne de routage existante et/ou effectuent la modification correspondante.

4. Procédé selon l'une des revendications précédentes,
caractérisé en ce
le premier appareil de commande émet à nouveau la première information seulement si pendant le fonctionnement du véhicule, au moins un autre appareil de commande communique une requête de besoin correspondant au premier appareil de commande.

5. Procédé selon l'une des revendications précédentes,
**caractérisé en ce que**
la requête de besoin est faite après l'établissement du réseau des appareils de commande dans le cadre de la construction du véhicule.

6. Procédé selon l'une des revendications précédentes,
**caractérisé en ce que**
la requête de besoin est effectuée à nouveau après le remplacement d'un appareil de commande et/ou après l'extension du réseau avec un autre appareil de commande et/ou après modification de la commande de déroulement d'au moins un appareil de commande et la consigne de routage est adaptée de manière correspondante.

7. Procédé selon l'une des revendications précédentes,
**caractérisé en ce que**
la consigne de routage est enregistrée au moins dans le portail,
* la consigne de routage étant, de préférence, un tableau de routage.

8. Procédé selon la revendication 7,
**caractérisé en ce que**
la consigne de routage est enregistrée dans une mémoire réinscriptible, non volatile, en particulier un composant de mémoire non volatile avec accès aléatoire (mémoire NV-RAM, Nom Volatile Random Access Memory).

9. Système de bus de véhicule automobile avec des appareils de commande reliés en réseau,
système **caractérisé en ce que**
le système de bus de données ou ses appareils de commande et/ou un dispositif d'initialisation externe aux véhicules, comporte au moins une commande de déroulement qui exécute le procédé selon l'une des revendications précédentes.

10. Produis de programme d'ordinateur pour un appareil de commande en réseau ou pour un système de bus de données d'un véhicule automobile,
**caractérisé par**
au moins une commande de déroulement qui produit l'exécution d'un procédé selon l'une quelconque des revendications précédentes.
